# FASCICULE DE BREVET EUROPEEN

(11) **EP 1 158 634 B1**
(45) Date de publication et mention de la délivrance du brevet: **10.06.2009**
(21) Numéro de dépôt: 01400433.7
(22) Date de dépôt: 19.02.2001
(51) Int. Cl.: H02G 3/04

(54) **Embout pour goulotte de cheminement de câbles ou de conducteurs électriques**
Endstück für den Führungskanal elektrischer Leiter oder Kabel
End piece for cable or electrical wiring duct

(30) Priorité: 24.02.2000 FR 0002330
(43) Date de publication de la demande: 28.11.2001
(73) Titulaire: LEGRAND FRANCE, 87000 Limoges (FR); LEGRAND SNC, 87000 Limoges (FR)
(72) Inventeur: Buard, Yvon, 53600 Voutre (FR)
(74) Mandataire: Santarelli

(56) Documents cités:
- EP-A- 0 849 851
- EP-A- 1 128 512
- DE-A- 19 755 706
- FR-A- 2 738 960

## Description

La présente invention concerne un embout destiné à fermer une extrémité d'une goulotte de cheminement de câbles ou de conducteurs électriques, cet embout comprenant une partie d'obturation pour fermer l'espace intérieur de la goulotte et une partie de fixation sur le fond du socle de la goulotte.

L'invention trouve une application particulièrement avantageuse pour fermer l'extrémité des goulottes de petites dimensions appelées encore moulures.

Un tel embout est destiné à protéger l'extrémité de la goulotte contre les chocs et, surtout, à protéger les personnes par rapport au courant électrique circulant dans les conducteurs de la goulotte.

Les deux fonctions se combinent d'ailleurs lorsque l'on veut empêcher l'introduction de corps étrangers du type fil, épingle ou tournevis dans le socle de la goulotte.

En outre, cet embout assure une fonction esthétique, et notamment par la transition harmonieuse entre le couvercle de fermeture de la goulotte et la partie d'obturation de l'embout, ainsi qu'entre la surface extérieure de la goulotte et celle du support de fixation de cette dernière.

On connaît déjà un embout du type précité, notamment du document FR 2 738 960, dont la partie de fixation s'appliquant sur le fond du socle de la goulotte est pourvue d'ouvertures de forme préférentiellement oblongue pour le passage de clous d'ancrage au travers du socle.

Le document EP-A-0 849 851 décrit un embout correspondant au préambule de la revendication 1.

Dans le cas de goulottes de petites dimensions ou moulures, la pose de tels clous s'avère délicate.

En effet, il est nécessaire d'intervenir alors à l'aide d'un marteau dans le fond du socle de la goulotte, ce qui n'est pas toujours aisé, et il arrive fréquemment qu'un coup de marteau détériore les ailes latérales du socle de la goulotte ou moulure.

Afin de résoudre l'inconvénient précité, la présente invention propose un nouvel embout caractérisé en ce que la partie de fixation comprend au moins une cheminée d'introduction d'un clou d'ancrage, qui s'élève sensiblement perpendiculairement au fond du socle de la goulotte, et qui présente une hauteur sensiblement égale à la profondeur dudit socle.

Ainsi, le sommet de la cheminée de la partie de fixation de l'embout selon l'invention, arrive à effleurement des sommets des ailes latérales du socle de la goulotte, ce qui permet de limiter la course du marteau en protégeant lesdites ailes latérales dudit socle.

D'autres caractéristiques non limitatives et avantageuses de l'embout selon l'invention sont les suivantes :
- la partie de fixation comprend au moins une patte destinée à s'appliquer sur le fond du socle de la goulotte et portant en saillie au moins une cheminée ;
- la partie de fixation comprend deux pattes sensiblement parallèles destinées à s'appliquer sur le fond du socle de la goulotte et portant chacune en saillie une cheminée. Cette disposition est particulièrement avantageuse dans le cas d'une goulotte ou moulure à deux compartiments longitudinaux, chaque patte de fixation venant se fixer dans le fond d'un des compartiments de ladite goulotte ;
- lesdites pattes peuvent comporter sur leurs bords longitudinaux intérieurs en vis-à-vis deux évidements en regard de forme complémentaire formant un logement pour la solidarisation de la partie de fixation au socle de la goulotte par un organe de fixation tel qu'une cheville plastique ;
- les évidements présentent, préférentiellement, la forme d'une portion de cercle. Une telle disposition des bords longitudinaux intérieurs ne peut être mise en oeuvre que dans le cas d'une moulure à un compartiment dans lequel seraient positionnées les deux pattes de la partie de fixation de l'embout selon l'invention ;
- chaque patte est raccordée à la partie d'obturation par une partie de raccordement ;
- la cheminée est positionnée à la jonction de la patte et de la partie de raccordement ;
- selon un premier mode de réalisation, la partie de raccordement est un prolongement de la patte elle-même ;
- selon un second mode de réalisation, la partie de raccordement comprend deux branches s'étendant à partir d'une extrémité de chaque patte de part et d'autre de ses bords longitudinaux, les branches formant une sorte de fourche de raccordement de ladite patte à la partie d'obturation ;
- selon un troisième mode de réalisation, la partie de raccordement est une languette qui s'étend généralement en oblique entre chaque patte et la partie d'obturation ;
- selon un quatrième mode de réalisation, la partie de raccordement est une languette qui s'étend entre une paroi externe de la cheminée et la partie d'obturation, en hauteur par rapport à chaque patte. Dans ce cas, il peut être prévu que la partie de raccordement s'étende dans un plan parallèle à celui de chaque patte, et situé sensiblement à la hauteur de l'extrémité supérieure de la cheminée ;
- selon un cinquième mode de réalisation, la partie de raccordement est une partie massive dont la surface inférieure est à effleurement de la surface inférieure de chaque patte et dont la surface supérieure arrive sensiblement à effleurement de l'extrémité supérieure de chaque cheminée ;
- préférentiellement, la partie de raccordement est une partie élastique autorisant un léger déplacement de la partie d'obturation par rapport à la partie de fixation lors du montage de l'embout sur le socle de la goulotte ;
- la partie de raccordement élastique de chaque patte à la partie d'obturation présente une forme ondulée formant ressort ;
- la partie d'obturation peut comprendre une paroi de fermeture et une portion de couvercle aptes à recouvrir l'extrémité du couvercle de fermeture de la goulotte ;
- la paroi de fermeture et la portion de couvercle de la partie d'obturation peuvent former une seule pièce issue de moulage d'une ou plusieurs matière(s) plastique(s), ou constituer deux pièces distinctes, rapportées l'une à l'autre, la paroi de fermeture étant solidarisée à la partie de fixation de l'embout ;
- la partie de fixation et la partie d'obturation de l'embout peuvent former une seule pièce issue de moulage d'une ou plusieurs matière(s) plastique(s) ;
- chaque patte de la partie de fixation présente à son extrémité libre un orifice pour le passage d'une vis de fixation dans le socle de la goulotte.

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue en perspective de côté d'une portion de goulotte fermée à une extrémité par un embout selon l'invention ;
- la figure 2 est une vue en perspective de dessus d'un mode de réalisation préférentiel de l'embout selon l'invention ;
- la figure 3 est une vue en coupe dans un plan longitudinal horizontal positionné à mi-hauteur de l'embout de la figure 2 ;
- la figure 4 est une vue en coupe selon le plan A-A de la goulotte représentée sur la figure 1 ;
- la figure 5 est une vue en coupe selon le plan B-B de la figure 4 ;
- la figure 6 est une vue en perspective d'un deuxième mode de réalisation de l'embout selon l'invention ;
- la figure 7 est une vue en perspective d'un troisième mode de réalisation de l'embout selon l'invention ;
- les figures 8 à 11 sont des vues schématiques dans un plan vertical de quatre modes de réalisation différents de l'embout conforme à l'invention ;
- la figure 12 est une vue schématique en perspective éclatée d'un autre mode de réalisation de l'embout conforme à l'invention.

Préliminairement, on notera que, d'une figure à l'autre, les parties identiques ou similaires des différents modes de réalisation seront dans la mesure du possible référencées par les mêmes signes de référence et ne seront pas décrites à chaque fois.

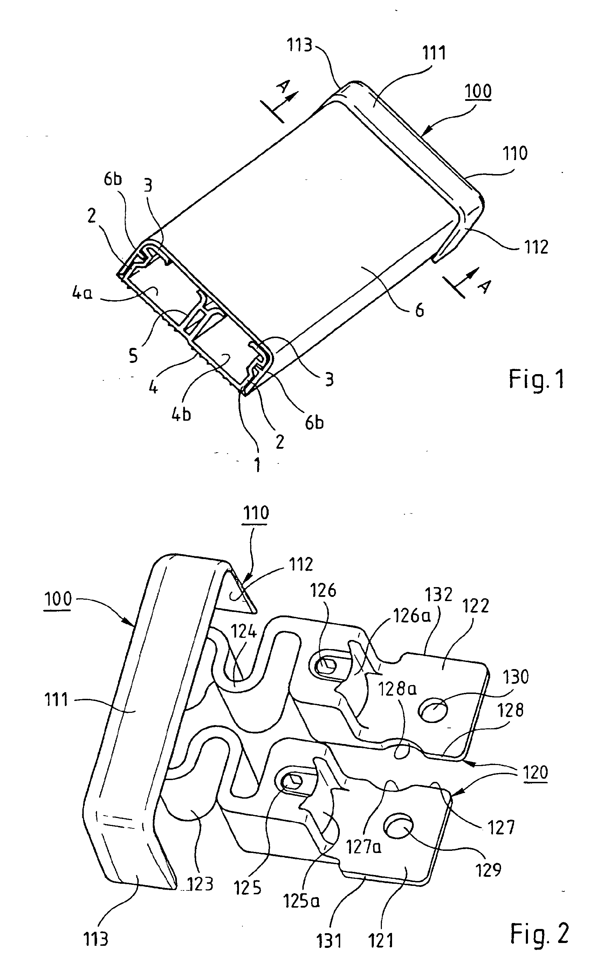

Sur la figure 1 on a représenté une goulotte 1 de petites dimensions, appelée encore moulure, dans laquelle sont destinés à cheminer des conducteurs ou câbles électriques.

De manière connue en soi, cette moulure 1 comporte un socle présentant un fond 4 bordé par deux ailes latérales longitudinales 2, le socle présentant en section, ici, la forme générale d'un U.

Dans le mode de réalisation représenté, les ailes latérales longitudinales 2 du socle de la goulotte comportent des retours 3 dirigés l'un vers l'autre dans un plan sensiblement transversal aux ailes latérales 2.

En outre, ici, le socle de la goulotte est divisé en deux compartiments longitudinaux par une paroi centrale longitudinale 5 présentant à son extrémité libre des rebords divergents, chaque rebord étant dirigé vers un retour 3 d'une aile latérale longitudinale 2 du socle de la goulotte.

Ainsi, le fond 4 du socle de la goulotte 1 est divisé en deux parties 4a, 4b ; ici chaque compartiment présente en section la forme générale d'un U.

La goulotte 1 est fermée par un couvercle de fermeture 6 qui comporte ici des bords tombants venant recouvrir les surfaces extérieures des ailes latérales longitudinales 2 du socle de la goulotte.

Bien entendu, selon un autre mode de réalisation non représenté, on peut prévoir que le couvercle de fermeture de la goulotte 1 soit un couvercle à bord droit enfilé dans des rainures longitudinales prévues sur chacun des retours des ailes latérales longitudinales de ladite goulotte.

Une extrémité de la goulotte 1 représentée sur la figure 1 est fermée par un embout 100.

Cet embout est destiné à protéger l'extrémité de la goulotte contre les chocs et surtout permet d'éviter d'avoir accès par cette extrémité aux conducteurs ou câbles électriques circulant dans cette goulotte, ou d'introduire à l'intérieur de la goulotte des corps étrangers tels que fil, épingle, tournevis etc..

De plus, cet embout 100 permet de parfaire l'esthétique de la goulotte en assurant une transition harmonieuse entre la surface extérieure du couvercle recouvrant le socle de la goulotte et le support sur lequel la goulotte est fixée.

A propos d'un tel support, il peut s'agir d'un mur ou d'une paroi verticale.

Un premier mode de réalisation préférentiel de l'embout 100 va être décrit maintenant en référence aux figures 2 à 5.

L'embout 100 représenté sur ces figures, comporte une partie d'obturation 110 et une partie de fixation 120 sur le fond du socle de la goulotte.

La partie d'obturation 110 comprend, ici, une paroi de fermeture 114 de l'espace intérieur de la goulotte et une portion de couvercle 111 destinée à recouvrir une coupe du couvercle de fermeture 6 de la goulotte (voir plus particulièrement la figure 1).

A cet effet, la portion de couvercle 111 de la partie d'obturation 110 de l'embout 100 comporte des bords tombants 112, 113 recouvrant les bords tombants 6a, 6b du couvercle de fermeture 6 de la goulotte 1.

La portion de couvercle 111, 112, 113 et la paroi de fermeture 114 de la partie d'obturation 110 de l'embout forment une seule pièce.

En outre, l'embout 100 comporte une partie de fixation 120 sur le fond 4 du socle de la goulotte.

Ici, la partie de fixation 120 et la partie d'obturation 110 de l'embout forment une seule pièce issue de moulage d'une ou plusieurs matière(s) plastique(s).

Ici, cette partie de fixation 120 comprend deux pattes 121, 122, chacune des pattes étant destinée à s'engager dans un des compartiments de la goulotte 1 et à s'appliquer contre le fond 4a, 4b de ces compartiments.

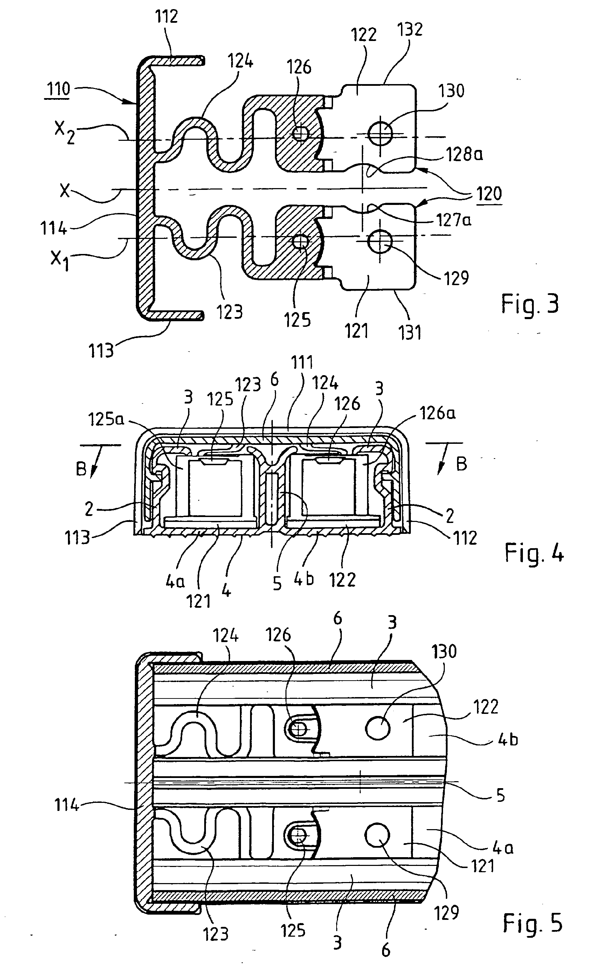

Chacune des pattes 121, 122 porte dans une région d'extrémité située du côté de la partie d'obturation 110 une cheminée 125, 126 qui s'élève sensiblement perpendiculairement à ladite patte et plus particulièrement perpendiculairement au fond 4a, 4b du socle de la goulotte et qui présente avantageusement une hauteur sensiblement égale à la profondeur du socle de la goulotte (voir plus particulièrement la figure 4).

Chaque cheminée 125, 126 constituée par un conduit cylindrique sert à l'introduction d'un clou d'ancrage de chacune des pattes dans la paroi support de la goulotte.

Ce clou d'ancrage traverse le socle de la goulotte pour s'ancrer dans la paroi supportant ladite goulotte.

Avantageusement, l'extrémité supérieure de chacune des cheminées 125, 126 par laquelle est introduit le clou d'ancrage arrive à effleurement des sommets des ailes latérales longitudinales 2 de ladite goulotte 1.

Ainsi, lors du clouage de chacune des pattes sur le socle de la goulotte, la cheminée forme un limiteur de course du marteau, ce qui permet d'éviter une détérioration malencontreuse d'une aile du socle de la goulotte.

Cela est particulièrement avantageux dans le cas de goulottes de petites dimensions où l'espace intérieur de la goulotte est relativement restreint et le fond du socle est difficile d'accès pour un clouage d'une patte en fond de socle.

Dans l'exemple représenté sur les figures 2 à 5, chaque cheminée 125, 126 est réalisée dans une partie relativement massique formant une sorte de bossage à l'extrémité de chacune des pattes de fixation 121, 122.

En outre, chacune des pattes de fixation 121, 122 est raccordée à la partie d'obturation 110, et plus particulièrement à la paroi de fermeture 114 par une partie de raccordement 123, 124.

Ici, chaque cheminée 125, 126 est située à la jonction entre la partie de raccordement 123, 124 et la patte 121, 122.

Selon le mode de réalisation représenté sur les figures 2 à 5, chaque partie de raccordement 123, 124 est constituée par une languette ou branche ondulée.

Une extrémité de la languette ou branche est raccordée à la paroi de fermeture 114 de la partie d'obturation 110 et une autre extrémité est raccordée à la surface extérieure 125a, 126a de la partie relativement massique dans laquelle est réalisée chaque cheminée 125, 126.

L'ondulation de chaque branche ou chaque languette 123, 124 constituant une partie de raccordement, est réalisée de part et d'autre d'un plan vertical s'étendant selon un axe X1 ou X2 parallèle à l'axe longitudinal X de l'embout qui est celui de la goulotte.

Une telle partie de raccordement 123, 124 constitue alors une liaison élastique entre la partie de fixation 120 et la partie d'obturation 110, autorisant un léger déplacement de la partie d'obturation par rapport à la partie de fixation lorsque l'embout est monté sur l'extrémité du socle de la goulotte.

Cela est particulièrement avantageux lorsque, comme cela est représenté sur les figures 2 à 5, la partie d'obturation, la partie de fixation et la partie de raccordement forment une seule pièce issue de moulage d'une ou plusieurs matière(s) plastique(s), et que la partie d'obturation comporte une portion de couvercle à bords tombants, comme cela a été précédemment décrit.

Ainsi, dans ce cas, la mise en place de l'embout sur le socle de la goulotte est relativement aisée et peut se faire même dans des conditions où l'extrémité du socle de la goulotte est difficile d'accès, cela est notamment le cas lorsque l'extrémité est placée dans un angle d'une paroi.

Lorsque l'extrémité de la goulotte est d'accès difficile, la partie de fixation de l'embout peut être mise en place sur le fond du socle de la goulotte, selon une direction de mise en place sensiblement perpendiculaire à l'axe X de ladite goulotte.

Quand la situation de l'extrémité de la goulotte le permet, l'embout peut être enfilé dans le socle de la goulotte selon l'axe X de celle-ci quand la situation de l'extrémité de la goulotte le permet.

La partie de fixation 120 de l'embout est fixée par clouage sur le fond du socle de la goulotte.

Puis la partie d'obturation 110 de l'embout 100 est légèrement déplacée en translation selon l'axe longitudinal de la goulotte vers l'extérieur du socle de manière à pouvoir positionner facilement le couvercle de fermeture de la goulotte sur celle-ci de façon à ce que sa coupe arrive à proximité de l'extrémité de ladite goulotte. En fait, la partie d'obturation est écartée de la partie de fixation de l'embout pour faciliter la pose du couvercle de fermeture de la goulotte sur cette dernière.

Enfin, par retour élastique de la partie d'obturation à sa position initiale, la portion de couvercle de cette partie d'obturation vient recouvrir la coupe du couvercle de fermeture en place sur le socle de la goulotte.

Cette liaison élastique entre la partie de fixation 120 et la partie d'obturation 110 de l'embout 100 permet, outre un déplacement en translation de la partie d'obturation par rapport à la partie de fixation, un mouvement léger de basculement des deux parties l'une par rapport à l'autre.

Comme le montrent plus particulièrement les figures 4 et 5, lorsque l'embout est mis en place à l'extrémité du socle de la goulotte, les cheminées s'élèvent perpendiculairement au fond du socle, et leurs extrémités supérieures sont coincées sous les retours 3 des ailes latérales longitudinales 2 du socle de la goulotte.

La partie d'obturation ferme transversalement la goulotte, avec sa portion de couvercle recouvrant une partie d'extrémité du couvercle de fermeture de ladite goulotte.

Bien entendu, l'embout, tel que représenté sur les figures 2 à 5, permet également sa fixation sur le socle de la goulotte par vissage, grâce à deux orifices 129, 130 prévus à chacune des extrémités libres des pattes 121, 122.

Par ailleurs, les bords longitudinaux intérieurs en vis-à-vis 127, 128 de chacune des pattes 121, 122 comprennent ici des évidements en regard 127a, 128a en forme de portion de cercle et définissant entre eux un logement pour la solidarisation éventuelle de la partie de fixation de l'embout au socle de la goulotte par un organe de fixation tel qu'une cheville plastique.

Un tel mode de fixation ne peut être envisagé que dans le cas où la goulotte est monocompartimentale, ce qui n'est pas le cas de la goulotte représentée sur les figures.

D'autres modes de réalisation peuvent être envisagés pour réaliser les parties de raccordement 123, 124 constituant la liaison élastique de la partie de fixation 120 à la partie d'obturation 110 de l'embout 100.

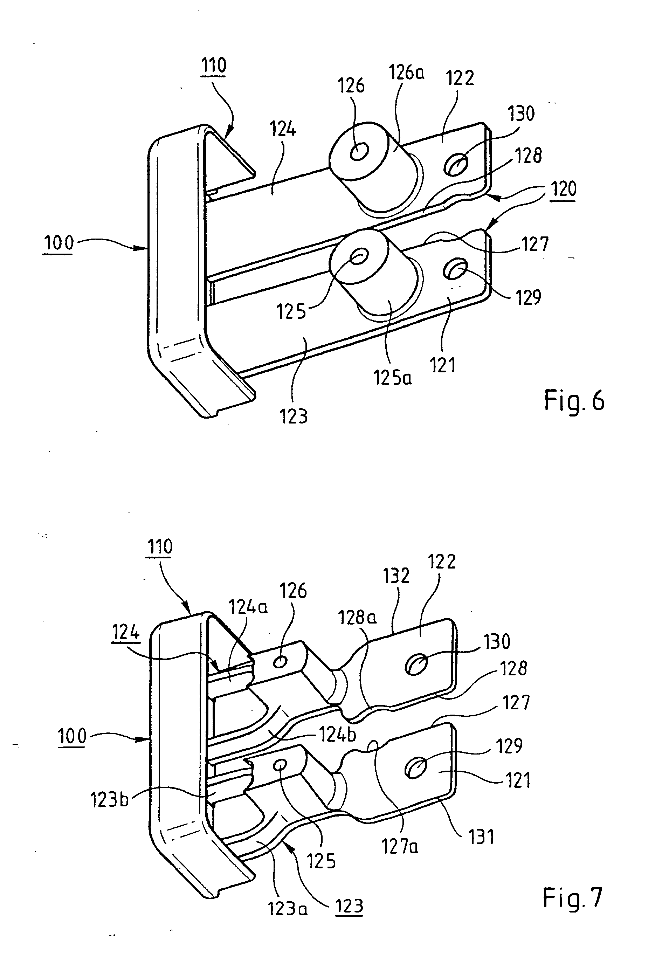

Parmi ces autres modes de réalisation, il y a ceux représentés sur les figures 6 à 11.

En effet, sur la figure 6, la partie de raccordement 123, 124 de chaque patte 121, 122 à la partie d'obturation, est constituée par un prolongement de chaque patte elle-même.

En outre, selon ce mode de réalisation simplifié, la paroi externe de chaque cheminée 125a, 126a est une paroi cylindrique de révolution.

Selon le mode de réalisation représenté sur la figure 7, chaque partie de raccordement 123, 124 de chaque patte 121, 122 à la partie d'obturation 110, comprend deux branches 123a, 123b, 124a, 124b s'étendant à partir d'une extrémité de chaque patte 121, 122 (où est située une cheminée) de part et d'autre de ses bords longitudinaux 127, 131, 128, 132, lesdites branches 123a, 123b et 124a, 124b formant une sorte de fourche de raccordement de ladite patte à la partie d'obturation 110.

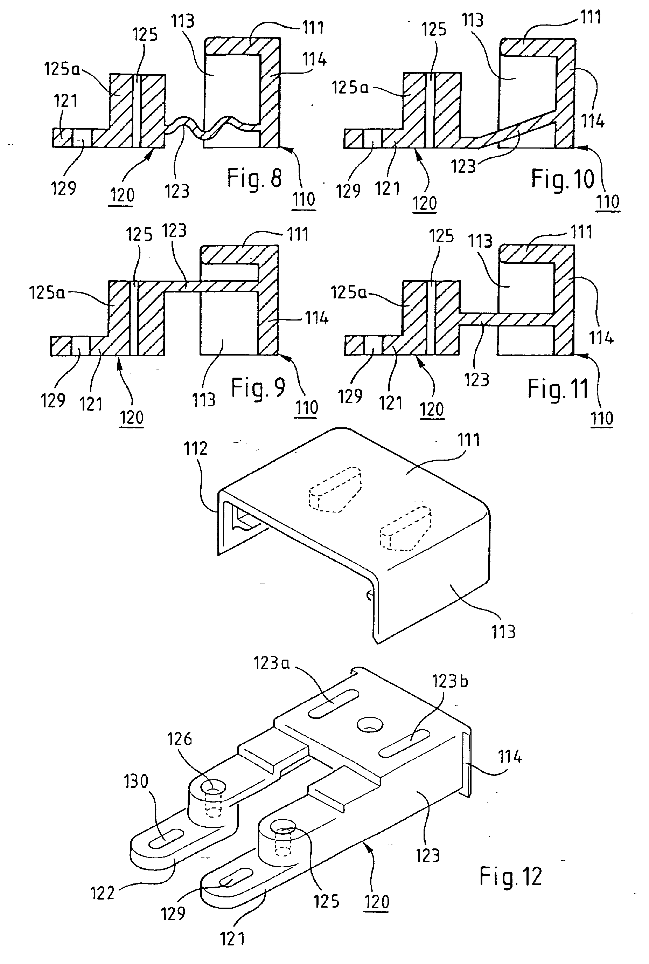

Selon un autre mode de réalisation représenté plus particulièrement sur la figure 8, il peut être prévu que la partie de raccordement ondulée 123 de la partie de fixation 120 à la partie d'obturation 110, présente une ondulation de part et d'autre d'un plan horizontal longitudinal.

Il peut également être prévu que chaque partie de raccordement 123 est constituée par une languette qui s'étend entre la paroi externe 125a de la cheminée 125 et la partie d'obturation 110, selon une direction généralement oblique, comme cela est représenté sur la figure 10.

Sur les figures 9 et 11, chaque partie de raccordement 123 s'étend entre une paroi externe 125a de la cheminée 125 et la partie d'obturation 110 en hauteur par rapport à chaque patte de fixation 121.

Sur la figure 9, la languette de raccordement 123 est située environ à la hauteur de l'extrémité supérieure de la cheminée et, sur la figure 11, la languette de raccordement 123 s'étend à peu près à mi-hauteur entre la patte de fixation 121 et la partie supérieure de la cheminée 125.

Pour réaliser une liaison élastique entre la partie de fixation 120 et la partie d'obturation 110 de l'embout selon l'invention, on peut également mouler la partie de raccordement en une matière plastique souple par rapport à la partie de fixation et à la partie d'obturation réalisées en matière plastique rigide, de telle sorte que l'ensemble forme une seule pièce bimatière.

On citera comme matières plastiques possibles, le PVC souple et rigide.

Sur la figure 12 on a représenté un autre mode de réalisation de l'embout selon l'invention, selon lequel la paroi de fermeture 114 et la portion de couvercle 111, 112, 113 de la partie d'obturation sont constituées de deux pièces distinctes, rapportées l'une à l'autre, la paroi de fermeture 114 étant solidarisée à la partie de fixation 120 de l'embout 100 et formant avec elle une seule pièce.

La portion de couvercle 111 comporte également des bords tombants 112, 113 et une partie supérieure plane apte à recouvrir une coupe du couvercle de fermeture.

En outre, selon ce mode de réalisation, la jonction entre la paroi de fermeture 114 et les pattes de fixation 121 est une partie de raccordement massique dont une surface inférieure arrive à effleurement de la surface inférieure des pattes 121, 122, et la surface supérieure arrive sensiblement à effleurement de l'extrémité supérieure des cheminées 125, 126.

Dans la partie supérieure de la partie de raccordement massique, entre la paroi de fermeture 114 et la partie de fixation 120, il est prévu des ouvertures oblongues 123a, 123b destinées à recevoir des pions de retenue de la portion de couvercle 111 de la partie d'obturation 110, apparaissant en pointillés sur la figure 2 de la portion de couvercle 111 de la partie d'obturation 110.

En particulier, on peut envisager, selon une variante non représentée, un embout du même type que celui représenté sur la figure 2, mais comportant une seule patte de fixation (similaire par exemple à une des pattes de fixation de l'embout représenté sur la figure 2) supportant une cheminée et raccordée à la partie d'obturation par une partie de raccordement ondulée formant une liaison élastique entre les parties d'obturation et de fixation.

On peut également envisager, selon une autre variante non représentée, un embout du même type que celui représenté sur la figure 2, mais comportant une seule patte de fixation (similaire à l'une des pattes de fixation de l'embout représenté sur la figure 2) présentant une double largeur par rapport à une patte de fixation de l'embout représenté sur la figure 2, et supportant deux cheminées identiques parallèles, cette patte de fixation à double largeur étant raccordée à la partie d'obturation par deux parties de raccordement ondulées formant des liaisons élastiques et s'étendant en parallèle entre les cheminées et la partie d'obturation, chacune desdites parties de raccordement étant issue de la paroi externe d'une cheminée.

## Revendications

1. Embout (100) destiné à fermer une extrémité d'une goulotte, comprenant une partie d'obturation (110) pour fermer l'espace intérieur de la goulotte et une partie de fixation (120) sur le fond du socle de la goulotte, **caractérisé en ce que** la partie de fixation (120) comprend au moins une cheminée (125, 126) d'introduction d'un clou d'ancrage, qui s'élève sensiblement perpendiculairement au fond dudit socle et qui présente une hauteur sensiblement égale à la profondeur dudit socle.

2. Embout selon la revendication 1, **caractérisé en ce que** la partie de fixation (120) comprend au moins une patte (121, 122) destinée à s'appliquer sur le fond du socle de la goulotte et portant en saillie au moins une cheminée (125, 126).

3. Embout selon l'une des revendications 1 ou 2, **caractérisé en ce que** la partie de fixation (120) comprend deux pattes sensiblement parallèles (121, 122) destinées à s'appliquer sur le fond du socle de la goulotte et portant chacune en saillie une cheminée (125, 126).

4. Embout selon la revendication 3, **caractérisé en ce que** les pattes (121, 122) comportent sur leurs bords longitudinaux intérieurs (127, 128) en vis-à-vis deux évidements en regard (127a, 128a) de forme complémentaire formant un logement pour la solidarisation de la partie de fixation au socle de la goulotte par un organe de fixation tel qu'une cheville plastique.

5. Embout selon la revendication 4, **caractérisé en ce que** les évidements (127a, 128a) présentent la forme d'une portion de cercle.

6. Embout selon l'une des revendications 2 à 5, **caractérisé en ce que** chaque patte (121, 122) est raccordée à la partie d'obturation (110) par une partie de raccordement (123, 124).

7. Embout selon la revendication 6, **caractérisé en ce que** la cheminée (125, 126) est positionnée à la jonction de la patte (121, 122) et de la partie de raccordement (123, 124).

8. Embout selon la revendication 6, **caractérisé en ce que** ladite partie de raccordement (123, 124) est un prolongement de la patte elle-même (121, 122).

9. Embout selon l'une des revendications 6 ou 7, **caractérisé en ce que** ladite partie de raccordement (123, 124) comprend deux branches (123a, 123b ; 124a, 124b) s'étendant à partir d'une extrémité de chaque patte (121, 122) de part et d'autre de ses bords longitudinaux (127, 131 ; 128, 132), lesdites branches (123a, 123b ; 124a, 124b) formant une sorte de fourche de raccordement de ladite patte (121, 122) à la partie d'obturation (110).

10. Embout selon l'une des revendications 6 ou 7, **caractérisé en ce que** la partie de raccordement (123) est une languette qui s'étend généralement en oblique entre chaque patte et la partie d'obturation.

11. Embout selon l'une des revendications 6 ou 7, **caractérisé en ce que** la partie de raccordement (123) est une languette qui s'étend entre une paroi externe (125a) de la cheminée (125) et la partie d'obturation (110), en hauteur par rapport à chaque patte (121).

12. Embout selon la revendication 11, **caractérisé en ce que** la partie de raccordement (123) s'étend dans un plan parallèle à celui de chaque patte (121), et situé sensiblement à la hauteur de l'extrémité supérieure de la cheminée.

13. Embout selon l'une des revendications 6 ou 7, **caractérisé en ce** la partie de raccordement (123) est une partie massive dont la surface inférieure est à effleurement de la surface inférieure de chaque patte (121, 122) et dont la surface supérieure arrive sensiblement à effleurement de l'extrémité supérieure de chaque cheminée (125, 126).

14. Embout selon l'une des revendications 6 à 12, **caractérisé en ce que** la partie de raccordement (123, 124) est une partie élastique autorisant un léger déplacement de la partie d'obturation (110) par rapport à la partie de fixation (120) lors du montage de l'embout sur le socle de la goulotte.

15. Embout selon la revendication 14, **caractérisé en ce que** la partie de raccordement élastique de chaque patte (121, 122) à la partie d'obturation (110) présente une forme ondulée formant ressort.

16. Embout selon l'une quelconque des revendications précédentes, **caractérisé en ce que** la partie d'obturation comprend une paroi de fermeture (114) et une portion de couvercle (111, 112, 113) apte à recouvrir l'extrémité du couvercle de fermeture (6, 6a, 6b) de la goulotte.

17. Embout selon la revendication 16, **caractérisé en ce que** la paroi de fermeture (114) et la portion de couvercle (111, 112, 113) de la partie d'obturation (110) forment une seule pièce issue de moulage d'une ou plusieurs matière(s) plastique(s).

18. Embout selon la revendication 16, **caractérisé en ce que** la paroi de fermeture (114) et la portion de couvercle (111, 112, 113) de la partie d'obturation sont deux pièces distinctes, rapportées l'une à l'autre, la paroi de fermeture étant solidarisée à la partie de fixation (120) de l'embout.

19. Embout selon l'une des revendications 16 à 18, **caractérisé en ce que** la partie de fixation (120) et la partie d'obturation (110) de l'embout forment une seule pièce issue de moulage d'une ou plusieurs matière(s) plastique(s).

20. Embout selon l'une quelconque des revendications 2 à 19, **caractérisé en ce que** chaque patte (121, 122) de la partie de fixation (120) présente à son extrémité libre un orifice (129, 130) pour le passage d'une vis de fixation dans le socle de la goulotte.

## Claims

1. End cap (100) for closing an end of trunking, said end cap including a closure part (110) for closing an interior space of the trunking and a fixing part (120) for fixing it to a back of a base section of the trunking, **characterised in that** the fixing part (120) includes at least one chimney (125, 126) for inserting a nail, which chimney is substantially perpendicular to the back of said base section and has a height substantially equal to the depth of said base section.

2. End cap according to claim 1, **characterised in that** the fixing part (120) includes at least one lug (121, 122) adapted to be applied to the back of the base section of the trunking and from which at least one chimney (125, 126) projects.

3. End cap according to claim 1 or 2, **characterised in that** the fixing part (120) includes two substantially parallel lugs (121, 122) adapted to be applied to the back of the base section of the trunking and from each of which at least one chimney (125, 126) projects.

4. End cap according to claim 3, **characterised in that** the lugs (121, 122) have on facing inside longitudinal edges (127, 128) facing recesses (127a, 128a) of complementary shape forming a housing for fastening the fixing part to the base section of the trunking by means of a fixing member such as a plastics material wall plug.

5. End cap according to claim 4, **characterised in that** the recesses (127a, 128a) are part-circular.

6. End cap according to any of claims 2 to 5, **characterised in that** each lug (121, 122) is connected to the closure part (110) by a connecting part (123, 124).

7. End cap according to claim 6, **characterised in that** the chimney (125, 126) is at the junction of the lug (121, 122) and the connecting part (123, 124).

8. End cap according to claim 6, **characterised in that** the connecting part ((123, 124) is an extension of the lug itself (121, 122).

9. End cap according to claim 6 or 7, **characterised in that** the connecting part (123, 124) has two branches (123a, 123b; 124a, 124b) extending from one end of each lug (121, 122) on each side of its longitudinal edges (127, 131; 128, 132) and said branches (123a, 123b; 124a, 124b) form a kind of fork connecting said lug (121, 122) to the closure part (110).

10. End cap according to claim 6 or 7, **characterised in that** the connecting part (123) is a tongue extending generally obliquely between each lug and the closure part.

11. End cap according to claim 6 or 7, **characterised in that** the connecting part (123) is a tongue which extends in the heightwise direction relative to each lug (121) between an outside wall (125a) of the chimney (125) and the closure part (110).

12. End cap according to claim 11, **characterised in that** the connecting part (123) extends in a plane parallel to that of each lug (121) and substantially at the height of an upper end of the chimney.

13. End cap according to claim 6 or 7, **characterised in that** the connecting part (123) is a massive part which has a bottom surface flush with a bottom surface of each lug (121, 122) and a top surface substantially flush with a top end of each chimney (125, 126).

14. End cap according to any of claims 6 to 12, **characterised in that** the connecting part (123, 124) is an elastic part allowing slight movement of the closure part (110) relative to the fixing part (120) when fitting the end cap to the base section of the trunking.

15. End cap according to claim 14, **characterised in that** the elastic part connecting each lug (121, 122) to the closure part (110) has a corrugated shape forming a spring.

16. End cap according to any preceding claim, **characterised in that** the closure part has a closure wall (114) and a cover portion (111, 112, 113) adapted to cover an end of a closure cover section (6, 6a, 6b) of the trunking.

17. End cap according to claim 16, **characterised in that** the closure wall (114) and the cover portion (111, 112, 113) of the closure part (110) are moulded in one piece from one or more plastics materials.

18. End cap according to claim 16, **characterised in that** the closure wall (114) and the cover portion (111, 112, 113) of the closure part are two separate components fastened together and the closure wall is fastened to the fixing part (120) of the end cap.

19. End cap according to any of claims 16 to 18, **characterised in that** the fixing part (120) and the closure part (110) of the end cap are moulded in one piece from one or more plastics materials.

20. End cap according to any of claims 2 to 19, **characterised in that** each lug (121, 122) of the fixing part (120) has at its free end an orifice (129, 130) through which a fixing screw can pass into the base section of the trunking.

## Patentansprüche

1. Endstück (100), das zum Verschließen eines Endes eines Kabelkanals bestimmt ist, mit einem Verschlussteil (110) zum Verschließen des Innenraums des Kabelkanals und einem Teil (120) zur Befestigung am Boden des Kabelkanalsockels,
**dadurch gekennzeichnet, dass** das Befestigungsteil (120) zum Einführen eines Verankerungsnagels wenigstens einen Schacht (125, 126) aufweist, der sich im Wesentlichen senkrecht zum Boden des Sockels erhebt und eine Höhe hat, die im Wesentlichen der Tiefe des Sockels entspricht.

2. Endstück nach Anspruch 1,
**dadurch gekennzeichnet, dass** das Befestigungsteil (120) wenigstens eine Lasche (121, 122) aufweist, die zum Anliegen am Boden des Kabelkanalsockels bestimmt ist und herausstehend wenigstens einen Schacht (125, 126) trägt.

3. Endstück nach einem der Ansprüche 1 oder 2,
**dadurch gekennzeichnet, dass** das Befestigungsteil (120) zwei im Wesentlichen parallele Laschen (121, 122) aufweist, die zum Anliegen am Boden des Kabelkanalsockels bestimmt sind und herausstehend jeweils einen Schacht (125, 126) tragen.

4. Endstück nach Anspruch 3,
**dadurch gekennzeichnet, dass** die Laschen (121, 122) an ihren sich gegenüberliegenden inneren Längsrändern (127, 128) zwei sich zugewandte, komplementär geformte Aussparungen (127a, 128a) aufweisen, die eine Aufnahme zur festen Verbindung des Befestigungsteils mit dem Sockel des Kabelkanals durch ein Befestigungsorgan, etwa einen Kunststoffdübel, bilden.

5. Endstück nach Anspruch 4,
**dadurch gekennzeichnet, dass** die Aussparungen (127a, 128a) die Form eines Kreisstücks haben.

6. Endstück nach einem der Ansprüche 2 bis 5,
**dadurch gekennzeichnet, dass** jede Lasche (121, 122) an dem Verschlussteil (110) durch ein Verbindungsteil (123, 124) angesetzt ist.

7. Endstück nach Anspruch 6,
**dadurch gekennzeichnet, dass** der Schacht (125, 126) an der Verbindungsstelle zwischen der Lasche (121, 122) und dem Verbindungsteil (123, 124) positioniert ist.

8. Endstück nach Anspruch 6,
**dadurch gekennzeichnet, dass** das Verbindungsteil (123, 124) eine Verlängerung der Lasche (121, 122) selbst ist.

9. Endstück nach einem der Ansprüche 6 oder7,
**dadurch gekennzeichnet, dass** das Verbindungsteil (123, 124) zwei Schenkel (123a, 123b; 124a; 124B) aufweist, die sich von einem Ende einer jeden Lasche (121, 122) aus beidseits von deren Längsrändern (127, 131; 128, 132) erstrecken, wobei die Schenkel (123a, 123b; 124a, 124b) eine Art Gabel zum Verbinden der Lasche (121, 122) mit dem Verschlussteil (110) bilden.

10. Endstück nach einem der Ansprüche 6 oder7,
**dadurch gekennzeichnet, dass** das Verbindungsteil (123) eine Zunge ist, die zwischen jeder Lasche und dem Verschlussteil allgemein schräg verläuft.

11. Endstück nach einem der Ansprüche 6 oder7,
**dadurch gekennzeichnet, dass** das Verbindungsteil (123) eine Zunge ist, die sich zwischen einer Außenwand (125a) des Schachts (125) und dem Verschlussteil (110) bezüglich jeder Lasche in der Höhe erstreckt.

12. Endstück nach Anspruch 11,
**dadurch gekennzeichnet, dass** sich das Verbindungsteil (123) in einer Ebene parallel zur Ebene jeder Lasche (121) erstreckt und im Wesentlichen in Höhe des oberen Endes des Schachts angeordnet ist.

13. Endstück nach einem der Ansprüche 6 oder 7,
**dadurch gekennzeichnet, dass** das Verbindungsteil (123) ein massives Teil ist, dessen Unterseite mit der Unterseite jeder Lasche (121, 122) bündig ist und dessen Oberseite mit dem oberen Ende jedes Schachts (125, 126) im Wesentlichen bündig abschließt.

14. Endstück nach einem der Ansprüche 6 bis 12,
**dadurch gekennzeichnet, dass** das Verbindungsteil (123, 124) ein elastisches Teil ist, das eine geringfügige Verschiebung des Verschlussteils (110) bezüglich des Befestigungsteils (120) beim Anbringen des Endstücks am Kabelkanalsockel zulässt.

15. Endstück nach Anspruch 14,
**dadurch gekennzeichnet, dass** das elastische Verbindungsteil jeder Lasche (121,122) mit dem Verschlussteil (110) eine gewellte Form hat, welche eine Feder bildet.

16. Endstück nach einem der vorhergehenden Ansprüche,
**dadurch gekennzeichnet, dass** das Verschlussteil eine Abschlusswand (114) und ein Deckelstück (111, 112, 113) umfasst, welches das Ende des Verschlussdeckels (6, 6a, 6b) des Kabelkanals zu bedecken vermag.

17. Endstück nach Anspruch 16,
**dadurch gekennzeichnet, dass** die Abschlusswand (114) und das Deckelstück (111, 112, 113) des Verschlussteils (110) ein einziges, durch Formgießen eines oder mehrerer Kunststoffe entstandenes Teil bilden.

18. Endstück nach Anspruch 16,
**dadurch gekennzeichnet, dass** die Abschlusswand (114) und das Deckelstück (111, 112, 113) des Verschlussteils zwei getrennte, aneinander angesetzte Teile sind, wobei die Abschlusswand mit dem Befestigungsteil (120) des Endstücks fest verbunden ist.

19. Endstück nach einem der Ansprüche 16 bis 18,
**dadurch gekennzeichnet, dass** das Befestigungsteil (120) und das Verschlussteil (110) des Endstücks ein einziges, durch Formgießen eines oder mehrerer Kunststoffe entstandenes Teil bilden.

20. Endstück nach einem der Ansprüche 2 bis 19,
**dadurch gekennzeichnet, dass** jede Lasche (121, 122) des Befestigungsteils (120) an ihrem freien Ende eine Öffnung (129, 130) zum Hindurchführen einer Schraube zur Befestigung am Kabelkanalsockel aufweist.
